# FASCICULE DE BREVET EUROPEEN

(11) **EP 1 583 192 B1**
(45) Date de publication et mention de la délivrance du brevet: **27.02.2013**
(21) Numéro de dépôt: 05102437.0
(22) Date de dépôt: 25.03.2005
(51) Int. Cl.: H02B 1/30

(54) **Armoire dotée d'ouvertures pour le passage de câbles**
Schaltschrank mit Kabeldurchführungen
Electric cabinet with cable feedthroughs

(30) Priorité: 31.03.2004 FR 0403397
(43) Date de publication de la demande: 05.10.2005
(73) Titulaire: Schneider Electric Industries SAS, 92500 Rueil-Malmaison (FR)
(72) Inventeur: Buchy, Stéphane, 67320, Schoenbourg (FR); Duchesne, Cyrille, 67700, Saverne (FR); Hermal, Marc, 67260, Bissert (FR); Wasner, Olivier, 67340, Ingwiller (FR)

(56) Documents cités:
- US-A- 5 488 543

## Description

La présente invention se rapporte à une armoire de distribution dont la structure comporte une ossature rigide sur laquelle viennent se fixer des panneaux verticaux qui peuvent être amovibles, et qui est destinée à recevoir de multiples appareillages destinés en particulier au câblage, au raccordement, à la protection, au contrôle/commande de divers équipements électriques.

Sous le terme armoire ou armoire de distribution, on regroupera dans la suite du document aussi bien des enveloppes d'équipements de distribution électrique ou d'équipements d'automatisme, que des baies de brassage pour les raccordements de câbles tels que des câbles de réseaux informatiques. De telles armoires de distribution nécessitent des raccordements vers l'extérieur, en amont et en aval, au moyen de câbles électriques de puissance, de contrôle, de communication, ainsi qu'au moyen éventuellement de câbles en fibre optique. Néanmoins, elles sont habituellement fermées lorsqu'elles sont installées sur leur site d'utilisation, pour des questions évidentes de sécurité et/ou d'environnement. Il faut donc aménager dans l'armoire une ou plusieurs ouvertures qui permettent de faire passer ces câbles. Les opérations initiales de câblage de l'armoire mais surtout les opérations successives de maintenance seront beaucoup plus faciles s'il est possible d'engager ou de retirer librement des câbles dans l'armoire, sans être gêné par la structure de l'ossature de l'armoire.

Par ailleurs, il serait également très avantageux de pouvoir monter dans une telle armoire des équipements, se présentant par exemple dans un châssis de type rack 19", qui possèdent déjà leurs connexions extérieures par fibres optiques, sans avoir à déconnecter et reconnecter ces fibres optiques lors du montage des châssis sur le site d'installation. En effet, la mise en oeuvre des connexions par fibres optiques étant coûteuse et délicate, il est préférable de préparer au maximum les raccordements avec des moyens appropriés en dehors du site final d'utilisation.

C'est pourquoi l'invention a pour but de proposer une armoire dotée d'une ou plusieurs ouvertures qui soient suffisamment larges pour permettre le passage des câbles et qui soient librement accessibles de l'extérieur, c'est-à-dire qui ne nécessitent pas de traverser l'ossature de l'armoire pour insérer ou retirer les câbles. De plus, contrairement à l'enseignement des documents US 5,488,543 et DE 83 00 044 concernant des armoires permettant le passage de câbles, il est essentiel que la solution retenue ne compromette cependant pas la rigidité globale de l'ossature de l'armoire, celle-ci pouvant être utilisée dans des applications industrielles et contenir des appareillages volumineux et lourds.

Pour cela, l'invention décrit une armoire de distribution comprenant une ossature composée de quatre montants verticaux dont la section horizontale a une forme de S, d'un cadre supérieur et d'un cadre inférieur formant des parois horizontales fixées à chaque montant, et comprenant plusieurs panneaux verticaux montés amovibles sur les montants. Le cadre supérieur et le cadre inférieur sont fixés sur deux faces perpendiculaires de chaque montant et au moins un cadre présente une échancrure débouchante sur un des côtés dudit cadre, formant une ouverture horizontale quand le panneau vertical correspondant est monté sur l'ossature. Ainsi, l'accès et le passage des câbles dans ces ouvertures se font en ayant seulement besoin de retirer un des panneaux verticaux amovibles, sans avoir besoin de traverser l'ossature. La rigidité de l'ossature est assurée par la fixation des cadres sur deux faces perpendiculaires de chaque montant vertical.

Selon une autre caractéristique, l'épaisseur de l'ouverture horizontale est égale à la profondeur de l'échancrure débouchante augmentée de la différence entre la largeur des montants verticaux et l'épaisseur du panneau vertical.

L'invention permet également de faciliter un cheminement direct des câbles électriques/optiques entrants et sortants, en évitant des courbures qui risquent d'endommager l'âme des câbles. De plus, la fixation de goulottes servant à acheminer les câbles entrants et sortants de l'armoire peut se faire sans décalage de niveau par rapport aux rebords verticaux des cadres, ce qui facilite les travaux d'installation sur site.

D'autres caractéristiques et avantages vont apparaître dans la description détaillée qui suit en se référant à un mode de réalisation donné à titre d'exemple et représenté par les dessins annexés sur lesquels :
- la figure 1 montre une vue simplifiée de dessus d'un exemple d'une armoire conforme à l'invention,
- la figure 2 détaille un mode de réalisation de la fixation d'un cadre supérieur au montant de l'ossature de l'armoire.

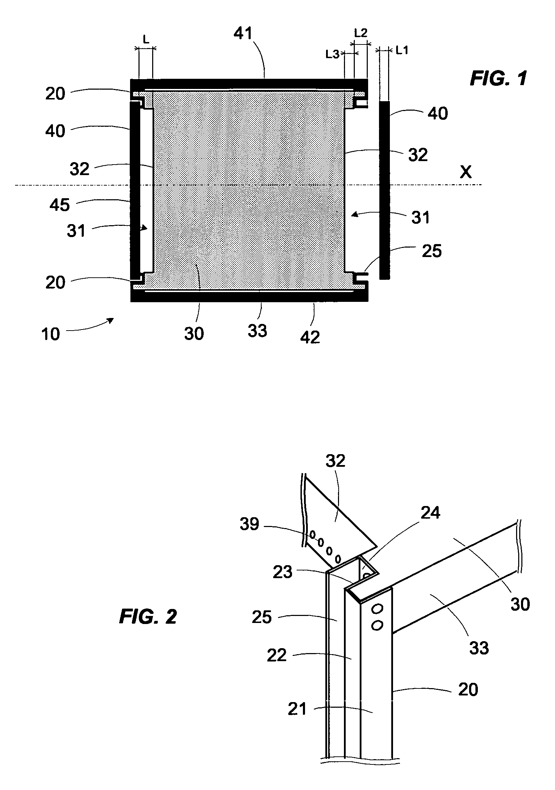

En référence à la figure 1, une armoire de distribution 10 comporte une ossature rigide qui est composée de quatre montants verticaux 20 disposés aux quatre coins de l'armoire, d'un cadre supérieur 30 et d'un cadre inférieur. Le cadre supérieur 30 constitue le toit de l'armoire 10 et le cadre inférieur constitue le fond de l'armoire. Ces cadres forment des parois horizontales pleines, ayant une forme approximativement carrée ou rectangulaire. Tous les cadres sont fixés à chaque coin aux quatre montants 20 qui sont préférentiellement identiques. L'armoire comporte également des parois verticales 40,41 qui sont montés amovibles sur les montants 20 et qui ne contribuent donc pas à assurer la rigidité de l'armoire. Ces parois verticales forment les panneaux latéraux 40, le panneau avant 42 et le panneau arrière 41 de l'armoire 10. Sur la figure 1, le cadre supérieur 30 comporte deux rebords verticaux opposés 33 faisant face aux panneaux avant et arrière 41,42, situés entre deux rebords verticaux opposés 32 faisant face aux panneaux latéraux 40. Divers accessoires non représentés, peuvent aussi être utilisées, en particulier des charnières pour le panneau avant.

Comme indiqué en figure 2, les montants verticaux 20 ont une section horizontale en forme de S, constituée de cinq parties 21,22,23,24,25. Une première partie 21 externe est parallèle aux panneaux avant 42 et arrière 41. Une seconde partie 22, perpendiculaire à la première partie 21 est située vers l'extérieur de l'armoire 10. Une troisième partie 23 médiane est perpendiculaire à la seconde partie 22. Une quatrième partie 24 est perpendiculaire à la troisième partie 23 et est située vers l'intérieur de l'armoire 10. Une cinquième partie 25 externe est perpendiculaire à la quatrième partie 24 et aux panneaux latéraux 40.

Chaque panneau latéral 40 est monté de façon amovible sur deux montants 20, suivant un moyen connu. Par exemple, chaque panneau latéral 40 repose sur deux vis pivot placées en bas de la partie médiane 23 des deux montants 20 correspondants et est verrouillable par deux loquets latéraux fixés en partie haute du panneau latéral 40 et qui s'insèrent dans une ouverture de la partie externe 25 des deux montants 20. Dans cette position, les panneaux latéraux 40 s'appuient sur l'extrémité de la partie 25 externe des montants verticaux 20.

Selon l'invention, au moins un des cadres de l'ossature de l'armoire présente au moins une échancrure 31 qui est débouchante sur tout ou partie d'un des côtés dudit cadre. Dans l'exemple de la figure 1, le cadre supérieur 30 comporte deux échancrures 31 présentes sur deux côtés 32 opposés faisant face aux panneaux latéraux 40. Grâce à ces échancrures 31, le rebord 32 de ces côtés opposés se situe donc en retrait vers le centre du cadre 30 d'une ligne passant par les deux montants 20 adjacents.

Chaque échancrure 31 a une largeur sensiblement égale à l'espace situé entre deux montants 20, c'est-à-dire sut tout un côté du cadre 30. Mais on aurait aussi pu imaginer une échancrure 31 qui soit réalisée sur un tronçon seulement du ou des côtés du cadre 30.

La figure 1 montre un panneau latéral 40 monté sur l'armoire 10 et un panneau latéral 40 désolidarisé de l'armoire 10. Quand un panneau latéral 40 est monté sur l'armoire 10, cela ferme l'échancrure 31 correspondante permettant ainsi de créer une ouverture horizontale dans le cadre 30. Dans ce cas, la profondeur L de cette ouverture horizontale est égale à la profondeur L3 de l'échancrure 31 augmentée de la différence entre la largeur L2 du montant vertical 20 et l'épaisseur L1 du panneau latéral 40, ces différentes dimensions étant toutes prises par rapport à un même axe X (voir figure 1).

Dans le mode de réalisation préféré, la largeur du montant vertical 20 est donnée par la longueur L2 de la partie externe 25 du montant 20 et l'épaisseur du panneau latéral 40 est donnée par la largeur L1 du rebord horizontal 45 du panneau 40. La profondeur L souhaitée doit permettre d'accueillir des câbles entrant et sortant de l'armoire 10 dans l'ouverture horizontale. Cette profondeur L peut donc être obtenue en jouant à la fois sur les dimensions L1, L2 et L3 de l'ossature de l'armoire 10, sachant qu'une profondeur L3 trop importante de l'échancrure 31 peut défavoriser la rigidité de l'ossature et que des longueurs L2 trop importantes des montants 20 pénalisent entre autres le coût et le poids de l'armoire 10. L'invention offre donc une grande souplesse pour moduler ces différents paramètres de façon à obtenir les caractéristiques et les performances souhaitées pour un type d'armoire donné.

Un opérateur de maintenance souhaitant modifier le câblage électrique de l'armoire accède librement aux câbles, en enlevant simplement un ou plusieurs panneaux latéraux 40, libérant ainsi les câbles logés dans la ou les échancrures 31 de manière à pouvoir enlever ou rajouter facilement des câbles sans que ceux-ci aient à traverser une ouverture dans l'ossature de l'armoire 10. De même; en enlevant un ou plusieurs panneaux latéraux 40, il peut également accéder à un équipement possédant des raccordements par fibres optiques, par exemple un équipement de type rack 19", et enlever ou remettre cet équipement sans avoir à déconnecter les fibres optiques.

Les cadres supérieur et inférieur contribuent à assurer la rigidité de l'ossature de l'armoire 10. C'est pourquoi, pour compenser une diminution de cette rigidité à cause d'échancrures 31 présentes dans les cadres de l'ossature, l'invention décrit que le cadre supérieur 30 et le cadre inférieur sont fixés sur deux faces perpendiculaires de chaque montant vertical. Dans le mode réalisation préféré, les rebords verticaux 33 du cadre supérieur 30 sont donc fixés contre la première partie externe 21 du S des montants 20 selon un premier plan parallèle aux panneaux avant et arrière 41,42. Les rebords verticaux 32 sont fixés contre la quatrième partie 24 du S des montants 20 selon un second plan parallèle aux panneaux latéraux 40 et perpendiculaire au premier plan. Grâce à la section en S des montants verticaux 20, cette fixation selon deux plans perpendiculaires constitue un moyen simple et efficace pour renforcer la rigidité de l'ossature de l'armoire, malgré la présence des éventuelles échancrures 31. De plus, chaque rebord 32,33 est fixé à chaque montant 21,24 par au moins deux points de fixation.

L'invention est destinée à être utilisée dans divers types d'armoires de distribution, en particulier dans des baies de brassage susceptibles d'accueillir des racks de largeur standardisée, habituellement appelés racks 19". Ces racks 19" sont généralement fixés à des montants verticaux, appelés montants 19", qui sont eux-mêmes fixés sur l'ossature de l'armoire 10. L'écartement H de ces montants 19" est normalisé (H = 465,1 mm ± 1,6 mm), ce qui facilite évidemment la généralisation de l'emploi de tels racks 19".

Pour une économie de temps et de moyens, il serait avantageux de pouvoir fixer des montants 19" directement sur l'ossature de l'armoire, sans avoir besoin d'ajouter des pièces intermédiaires supplémentaires pour obtenir l'écartement normalisé H voulu. C'est pourquoi, en particulier dans des armoires de distribution ayant une largeur totale sensiblement égale à 600mm, la profondeur L3 des échancrures 31 et la largeur L2 des montants 20 sont choisies pour que les rebords verticaux 32 des côtés latéraux du cadre supérieur 30 et du cadre inférieur puissent accueillir directement des montants 19" avec le bon écartement normalisé H. Pour cela, lesdits rebords verticaux 32 présentent des perforations 39 (voir figure 2) qui permettent la fixation directe et rapide des montants 19" sur l'ossature de l'armoire.

Selon une alternative équivalente de l'invention, une échancrure 31 dans le cadre supérieur 30 et/ou le cadre inférieur aurait pu être réalisée sur un des côtés 33 (au lieu des côtés 32), par exemple sur le côté faisant face au panneau arrière 41 de l'armoire 10 (au lieu des panneaux latéraux 40), de façon à pouvoir aisément sortir les câbles vers l'arrière de l'armoire. Dans ce cas, la forme en S des montants verticaux 20 aurait été inversée afin que la partie externe 25 du S soit perpendiculaire et dirigée vers le panneau arrière 41. Les autres caractéristiques décrites dans l'invention devraient évidemment être adaptées à la nouvelle position de l'échancrure 31.

Pour améliorer l'étanchéité de l'armoire, des balais peuvent être fixés sur le rebord horizontal 45 supérieur et/ou inférieur du ou des panneaux latéraux 40, par exemple par pincement ou équivalent. Ces balais, qui ne sont pas représentés dans les figures, occupent l'espace libre situé entre les différents câbles présents dans l'échancrure 31 et protègent donc de la poussière l'intérieur de l'armoire 10, lorsque le panneau latéral 40 est monté. Par contre, ils ne gênent pas l'opérateur lorsque le panneau 40 est enlevé.

## Revendications

1. Armoire de distribution (10) comprenant une ossature composée de quatre montants verticaux (20), d'un cadre supérieur (30) et d'un cadre inférieur formant des parois horizontales fixées à chaque montant (20), et comprenant plusieurs panneaux verticaux (40,41,42), au moins un cadre (30) présentant une échancrure (31) débouchante sur un des côtés (32,33) dudit cadre, formant une ouverture horizontale quand le panneau vertical (40) correspondant est monté sur l'ossature; **caractérisé en ce que** les panneaux verticaux sont montés amovibles sur les montants (20), le et **en ce que** le cadre supérieur et le cadre inférieur sont fixés sur deux faces perpendiculaires (21,24) de chaque montant (20) présentant une section horizontale en forme de S.

2. Armoire de distribution selon la revendication 1, **caractérisé en ce que** le cadre supérieur (30) présente deux échancrures (31) débouchantes sur deux côtés (32) opposés du cadre supérieur (30).

3. Armoire de distribution selon la revendication 1, **caractérisé en ce que** le cadre inférieur présente deux échancrures débouchantes sur deux côtés opposés du cadre inférieur.

4. Armoire de distribution selon la revendication 1, **caractérisé en ce que** l'épaisseur (L) de l'ouverture horizontale est égale à la profondeur (L3) de l'échancrure (31) débouchante augmentée de la différence entre la largeur (L2) des montants verticaux (20) et l'épaisseur (L1) du panneau vertical (40).

5. Armoire de distribution selon la revendication 1, **caractérisé en ce que** des rebords verticaux (32) du cadre supérieur (30) et du cadre inférieur présentent des perforations (39) pour la fixation directe de montants verticaux de type 19".

## Claims

1. Distribution cabinet (10) comprising a framework consisting of four vertical uprights (20), a top frame (30) and a bottom frame forming horizontal walls fastened to each upright (20), and comprising a number of vertical panels (40, 41, 42), at least one frame (30) having an indentation (31) opening onto one of the sides (32, 33) of said frame forming a horizontal opening when the corresponding vertical panel (40) is mounted on the framework, **characterized in that** the vertical panels are mounted removably on the uprights (20), and **in that** the top frame and the bottom frame are fastened on two perpendicular faces (21, 24) of each upright (20) having an S-shaped horizontal section.

2. Distribution cabinet according to Claim 1, **characterized in that** the top frame (30) has two indentations (31) opening onto two opposite sides (32) of the top frame (30).

3. Distribution cabinet according to Claim 1, **characterized in that** the bottom frame has two indentations opening onto two opposite sides of the bottom frame.

4. Distribution cabinet according to Claim 1, **characterized in that** the thickness (L) of the horizontal opening is equal to the depth (L3) of the opening indentation (31) augmented by the difference between the width (L2) of the vertical uprights (20) and the thickness (L1) of the vertical panel (40).

5. Distribution cabinet according to Claim 1, **characterized in that** vertical edges (32) of the top frame (30) and of the bottom frame have perforations (39) for the direct fixing of vertical uprights of 19" type.

## Patentansprüche

1. Schaltschrank (10) mit einem aus vier vertikalen Holmen (20), einem oberen Rahmen (30) und einem unteren Rahmen, die horizontale Wände bilden, die an jedem Holm (20) befestigt sind, bestehenden Skelett und mehreren vertikalen Platten (40, 41, 42), wobei mindestens ein Rahmen (30) eine Aussparung (31) aufweist, die an einer der Seiten (32, 33) des Rahmens offen ist und eine horizontale Öffnung bildet, wenn die entsprechende vertikale Platte (40) am Skelett montiert ist, **dadurch gekennzeichnet, dass** die vertikalen Platten entfernbar an den Holmen (20) montiert sind und dass der obere Rahmen und der untere Rahmen an zwei senkrechten Flächen (21, 24) jedes Holms (20) befestigt sind, der im horizontalen Schnitt S-förmig ist.

2. Schaltschrank nach Anspruch 1, **dadurch gekennzeichnet, dass** der obere Rahmen (30) zwei Aussparungen (31) aufweist, die an zwei gegenüberliegenden Seiten (32) des oberen Rahmens (30) offen sind.

3. Schaltschrank nach Anspruch 1, **dadurch gekennzeichnet, dass** der untere Rahmen zwei Aussparungen aufweist, die an zwei gegenüberliegenden Seiten des unteren Rahmens offen sind.

4. Schaltschrank nach Anspruch 1, **dadurch gekennzeichnet, dass** die Dicke (L) der horizontalen Öffnung gleich der Tiefe (L3) der offenen Aussparung (31) ist, vermehrt um die Differenz zwischen der Breite (L2) der vertikalen Holme (20) und der Dicke (L1) der vertikalen Platte (40).

5. Schaltschrank nach Anspruch 1, **dadurch gekennzeichnet, dass** vertikale Kanten (32) des oberen Rahmens (30) und des unteren Rahmens Perforationen (39) zur direkten Befestigung von vertikalen 19"-Holmen aufweisen.
